# EUROPÄISCHE PATENTSCHRIFT

(11) **EP 3 292 613 B1**
(45) Veröffentlichungstag und Bekanntmachung des Hinweises auf die Patenterteilung: **03.04.2019**
(21) Anmeldenummer: 16728917.2
(22) Anmeldetag: 07.06.2016
(51) Int. Cl.: H02K 1/24, H02K 1/27, H02K 15/03, H02K 15/12

(54) **RELUKTANZROTOR MIT ZUSÄTZLICHER EIGENER MAGNETISIERUNG**
RELUCTANCE ROTOR WITH ADDITIONAL OWN MAGNETIZATION
ROTOR A RELUCTANCE A MAGNETISATION PROPRE SUPPLEMENTAIRE

(30) Priorität: 17.07.2015 EP 15177281
(43) Veröffentlichungstag der Anmeldung: 14.03.2018
(73) Patentinhaber: Siemens Aktiengesellschaft, 80333 München (DE)
(72) Erfinder: BÜTTNER, Klaus, 97618 Hollstadt (DE); CERNY, Marco, 97720 Nüdlingen (DE); GREINER, Robert, 91083 Baiersdorf (DE); OCHSENKÜHN, Manfred, 92348 Berg (DE); WARMUTH, Matthias, 97618 Windshausen (DE)
(86) Internationale Anmeldenummer: PCT/EP2016/062836
(87) Internationale Veröffentlichungsnummer: WO 2017/012766

(56) Entgegenhaltungen:
- EP-A1- 1 282 215
- EP-A1- 2 744 076
- WO-A1-2011/018119
- WO-A2-2009/063350
- DE-A1- 4 217 288
- JP-A- 2000 068 141
- US-A1- 2007 151 632

## Beschreibung

Die Erfindung betrifft einen Rotor für eine Reluktanzmaschine, eine elektrische Maschine mit einem solchen Rotor sowie ein Verfahren zum Herstellen des genannten Rotors. Der Rotor weist ein Blechpaket mit mehreren elektrisch voneinander isolierten Rotorblechschichten auf. Jede Rotorblechschicht kann streifenförmige Flussleitabschnitte zum Leiten eines magnetischen Flusses zwischen d-Achsen des Rotors aufweisen. Die Flussleitabschnitte erstrecken sich in ihrer Längserstreckung schräg oder quer zu einer jeweiligen q-Achse des Rotors und sind durch Flusssperren voneinander getrennt.

Ein solcher Rotor für einen Reluktanzmotor ist aus der US 5 818 140 A bekannt. Darin ist ein Rotor beschrieben, dessen Blechpaket aus Rotorblechen besteht, die Ausstanzungen aufweisen. Dieser Rotor ist hier auch als Vagati-Rotor bezeichnet. Zwischen den einzelnen Flussleitabschnitten befindet sich in den durch Ausstanzungen erzeugten Flusssperren Luft, die als magnetische Flusssperre wirkt. Die Ausstanzungen führen aber zu einer Schwächung der mechanischen Stabilität des Blechpakets, so dass der beschriebene Rotor nicht für große Drehzahlen, insbesondere nicht für Drehzahlen größer als 3.000 Umdrehungen/Minute, geeignet ist. Aus diesem Grund sind Rotoren der beschriebenen Art nicht für hohe Drehzahlanforderung geeignet.

Aus der JP 2002 095227 A ist ein Vagati-Rotor bekannt, bei dem die Flusssperren mit einer Vergussmasse aus Kunstharz ausgegossen sind. Die radial angrenzenden Flussleitabschnitte weisen hierbei trapezförmige Aussparungen auf, in die das Kunstharz beim Vergießen ebenfalls fließt. Hierdurch sind die Flussleitabschnitte dann über eine Schwalbenschwanzverbindung mit dem ausgehärteten Kunstharz verbunden. Bei hohen Drehzahlen wird so eine durch Fliehkräfte bewirkte Zugkraft vom Außenumfang des Rotors über das Kunstharz nach innen zur Welle hin abgeleitet. Nachteilig hierbei ist, dass die trapezförmigen Aussparungen in den Flussleitabschnitten die Effizienz des Motors beeinträchtigen, da der magnetische Fluss behindert wird. Durch die Anordnung wird zudem das Kunstharz mit einer Zugspannung beaufschlagt, was zu einem Bruch oder Riss des Kunstharz führen kann.

Als ein Konstruktionsprinzip eines Reluktanzrotors ist bekannt, in diesen noch Permanentmagnete einzusetzen, um einen hybriden Rotortyp aus Reluktanz- und Synchronmotor zu erhalten. Als das vom Rotor erzeugte mechanische Drehmoment M ergibt sich M = 3/2 p (P * Iq + (Ld - Lq) * Id * Iq), wobei p die Polpaarzahl, P der durch die Permanentmagneten erzeugten zusätzliche Polradfluss, Iq die q-Komponente des Spulenstroms des Stators, Id die d-Komponente des Spulenstroms des Stators, Lq die q-Komponente des Rotorinduktivität und Ld die d-Komponente der Rotorinduktivität angibt.

Das Anordnen von Permanentmagneten in einen Reluktanzrotor weist mehrere Nachteile auf. Die Permanentmagneten werden in der Regel als Quader oder Blöcke hergestellt, die dann in das Blechpaket des Reluktanzrotors eingesetzt werden. Hierzu müssen die Flusssperren, in welchen die Permanentmagneten angeordnet werden sollen, eine eckige Form aufweisen, um die Permanentmagnete aufnehmen und festhalten zu können. Indem die Luftsperren mit möglichst niedriger Varianz an Formen der Permanentmagneten an die Form der Permanentmagneten angepasst sind, sind sie nicht mehr optimal an den Feldverlauf des magnetischen Flusses angepasst, wie er zum Realisieren eines Vagati-Rotors nötig ist. Des Weiteren lassen sich die Permanentmagnete nicht lückenlos in den gekrümmten Flusssperren anordnen, so dass Zwischenräume zwischen den Permanentmagneten vorhanden sind, die mit Luft gefüllt sind. Des Weiteren lassen sich die die Permanentmagnete nicht lückenlos in ein geschrägtes Blechpaket entlang der dadurch entstehenden axial gekrümmten Durchgänge oder Tunnel anordnen, da zum Einfügen der meist quaderförmigen Permanentmagnete die Abmessungen derselben abhängig vom Schrägungswinkel kleiner sein müssen als die Flusssperren. Dies führt zu Verlust von Effizienz.

In dem Dokument WO 2009/063350 A2 ist ein Reluktanzrotor beschrieben, in dessen Flusssperren ein dauermagnetisches Material angeordnet ist. Das dauermagnetische Material kann in einer Kunststoffmatrix angeordnet sein und durch Spritzgießen in die Flusssperren eingefüllt worden sein. Mittels des Materials kann auch an axialen Endflächen des Rotors jeweils eine Endscheibe an geformt sein, um den Rotor zu stabilisieren. Durch Formen der Kunststoffmatrix kann eine Unwucht des Rotors ausgeglichen werden.

Der Erfindung liegt die Aufgabe zugrunde, einen Reluktanzrotor mit zusätzlicher eigener Magnetisierung effizient auszugestalten.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Rotor für eine Reluktanzmaschine bereitgestellt. In an sich bekannter Weise weist der Rotor ein Blechpaket mit mehreren Blechpaketschichten oder kurz Schichten auf. Jede der Schichten weist in der eingangs beschriebenen Weise Flussleitabschnitte auf, die jeweils durch ein magnetisch leitfähiges Rotorblech gebildet sind und sich zwischen jeweils zwei benachbarten d-Achsen und schräg oder quer zu einer jeweiligen q-Achse des Rotors erstrecken. Jede Austrittsstelle einer der d-Achsen des Rotors aus dem Rotor stellt einen Pol des Rotors für die Reluktanzmaschine dar. Der beschriebene Erstreckungsverlauf ist dabei bezogen auf einen senkrecht zur Rotationsachse gebildeten Querschnitt des Rotors. Die Flussleitabschnitte sind voneinander jeweils durch eine Flusssperre getrennt. Mit anderen Worten befindet sich zwischen benachbarten Flussleitabschnitten jeweils eine Flusssperre. Das heißt die Rotorbleche sind aus magnetisch leitfähigem Material, insbesondere weichmagnetischem Material gebildet. Dagegen weisen die Flusssperren kein weichmagnetisches Material auf. Bei dem erfindungsgemäßen Rotor sind die Flusssperren mit einer Vergussmasse ausgegossen.

Um nun den Rotor mit einer Eigenmagnetisierung zu versehen, ist in einer oder mehreren oder jeder der Flusssperren die Vergussmasse derart ausgestaltet, dass sie Körner oder Partikel aufweist, die dauermagnetisch sind. Mit anderen Worten weist die Vergussmasse ein Pulver oder ein Granulat aus Körner oder Partikeln auf, von denen jeder dauermagnetisch ist, das heißt ein eigenes jeweiliges Magnetfeld erzeugt. Unter einem Partikel ist im Zusammenhang mit der Erfindung insbesondere ein Körper oder Objekt zu verstehen, das einen größten Durchmesser von 5 Zentimeter, insbesondere 1 Zentimeter aufweist. Indem die Partikel als Vergussmasse oder in einer Vergussmasse in den Flusssperren angeordnet sind, weist die Vergussmasse die gleiche Form wie die Flusssperren auf, mit anderen Worten sind die Flusssperren bevorzugt vollständig mit der Vergussmasse gefüllt.

Durch die Erfindung ergibt sich der Vorteil, dass der permanentmagnetische Bereich im Rotor in seiner Form an die Form der Flusssperren angepasst ist. Somit können die Flusssperren und damit auch die Flussleitabschnitte an einen gewünschten Verlauf eines magnetischen Flusses angepasst werden, das heißt der Rotor insbesondere nach dem Prinzip von Vagati optimal ausgestaltet werden. Die zusätzliche Eigenmagnetisierung des Rotors kann durch die Partikel in der Vergussmasse hinzugefügt werden, ohne dass hierzu eine Form der magnetisch leitfähigen Rotorbleche angepasst oder verändert werden muss. Somit kann ein und derselbe Blechschnitt von Rotorblechen sowohl für einen reinen Reluktanzrotor, d.h. einen Vagati-Rotor, verwendet werden als auch für den erfindungsgemäßen Rotor, bei welchem zusätzlich zu dem Reluktanzrotor noch eine Permanenterregung und Dauermagnetisierung mittels der Vergussmasse bereitgestellt wird.

Gemäß der Erfindung ist an gegenüberliegenden axialen Paketenden des Blechpakets jeweils eine aus der Vergussmasse gebildete Endscheibe an das Blechpaket angegossen. Mit anderen Worten sind die Schichten des Blechpakets in axialer Richtung zwischen zwei Endscheiben eingefasst oder angeordnet. Die Endscheiben sind dabei mittels der Vergussmasse gebildet, wodurch die Endscheiben im selben Fertigungsschritt wie das Ausfüllen der Flusssperren mittels der Vergussmasse gefertigt werden können.

Hierzu ist vorgesehen, dass die Vergussmasse in den Flusssperren und die Endscheiben einen einteiligen Körper bilden, durch welchen die Schichten des Blechpakets mit einer Kraft beaufschlagt sind. Die Kraft wirkt in axialer Richtung zur Rotormitte hin. Mit anderen Worten sind die Schichten des Blechpakets durch die beiden Endscheiben zusammengepresst. Mit anderen Worten ist das Blechpaket durch den Körper aus Vergussmasse verspannt. Dies dämpft in vorteilhafter Weise Eigenschwingungen des Rotors während einer Rotation desselben.

Die Erfindung umfasst auch optionale Weiterbildungen des Rotors, durch welche sich zusätzliche Vorteile ergeben.

Gemäß einer Weiterbildung ist in einer oder mehreren oder jeder der Flusssperren ein jeweiliges Magnetfeld der Partikel entlang einer Längserstreckungsrichtung der jeweiligen Flusssperre oder unter einem Winkel zur Längserstreckungsrichtung der jeweiligen Flusssperre ausgerichtet. Die Längserstreckungsrichtung kann beispielsweise als eine Mittelachse der Flusssperre definiert sein, welche sich von einer d-Achse zur benachbarten d-Achse bevorzugt bogenförmig erstreckt. Der genannte Winkel ist insbesondere kleiner als 45°. Durch die Weiterbildung ergibt sich der Vorteil, dass der durch die Partikel gebildete permanente magnetische Pol des Rotors und die an den d-Achsen gebildeten Pole für die Reluktanzmaschine derart zueinander angeordnet sind, dass mit denselben magnetischen Spulen des Stators sowohl das Reluktanz-basierte als auch das Synchronmaschinen-basierte Drehmoment erzeugt werden kann.

Gemäß einer Weiterbildung sind in einer oder mehreren oder jeder der Flusssperren die Partikel als getrocknetes Sediment in der Flusssperre abgelagert. Mit anderen Worten sind die Partikel als Suspension, beispielsweise als Schlamm, in die Flusssperren eingespült oder eingepresst worden und anschließend die Vergussmasse ausgetrocknet worden, so dass nur noch die Partikel übrig bleiben. Hierdurch ergibt sich der Vorteil, dass die Vergussmasse einen besonders hohen Anteil an Partikeln aufweist, da keine weiteren Füllstoffe in der Flusssperre angeordnet sind.

Gemäß einer anderen Weiterbildung sind in einer oder mehreren oder jeder der Flusssperren die Partikel in einem festen Kunststoff angeordnet. Mit anderen Worten sind die Partikel in einer Trägermatrix oder Kunststoffmatrix angeordnet. Ein Volumenanteil der Partikel in der Vergussmasse kann hierbei in einem Bereich von 10 Prozent bis 90 Prozent liegen. Bevorzugt ist ein Anteil von 10 Prozent bis 80 Prozent vorgesehen. Der Kunststoff erhöht die mechanische Stabilität des Rotors. Als Kunststoff kann beispielsweise ein Duroplast oder ein Thermoplast bereitgestellt sein. Zusätzlich kann vorgesehen sein, dass in der Vergussmasse in einer oder mehreren oder jeder der Flusssperren die Vergussmasse einen Füllstoff aufweist, der eine größere Zugfestigkeit als der Kunststoff aufweist. Hierdurch ist eine Rissfestigkeit des Kunststoffs vergrößert, was insbesondere bei der Übertragung von Fliehkräften oder Zentrifugalkräften vorteilhaft ist, da ein Kunststoff, beispielsweise ein Kunstharz, spröde und hierdurch rissanfällig sein kann, wenn Zugkräfte übertragen werden. Der Füllstoff kann z.B. durch Fasern, insbesondere Glasfasern, gebildet sein.

Gemäß einer Weiterbildung ist zumindest eine der Endscheiben, bevorzugt sind beide Endscheiben, rotatorisch asymmetrisch ausgestaltet und die jeweilige rotatorische Asymmetrie der Endscheiben kompensiert eine bezüglich einer Rotationsachse vorhandene Unwucht des Blechpakets. Mit anderen Worten können die Endscheiben beispielsweise erhabene Konturen aufweisen oder in die Endscheiben Konturen eingebracht sein, welche das Auswuchten oder Wuchten des Rotors vereinfachen. Die Kompensation der Unwucht durch die Endscheiben erfolgt zumindest teilweise, bevorzugt vollständig.

Eine Weiterbildung der Erfindung sieht vor, dass in einer oder mehreren oder jeder der Flusssperren die Partikel als ein Dauermagnetpulver bereitgestellt sind. Besonders kostengünstig ist hierbei ein Hartferritpulver. Es kann auch ein Seltenerdmagnetpulver vorgesehen sein, durch welches eine besonders hohe Felddichte das durch die Partikel erzeugten Magnetfelds erreicht wird. Es kann auch eine Mischung aus zwei verschiedenen Dauermagnetpulvern vorgesehen sein, wodurch Eigenschaften der jeweiligen Magnetpulver kombiniert werden.

Gemäß einer Weiterbildung liegt ein mittlerer Partikeldurchmesser D50 in einem Bereich von 10 Mikrometer bis 1 Millimeter. Der Partikeldurchmesser D50 beschreibt die Korngröße der Partikel als Zentralwert oder 50%-Quantil der statistischen Verteilung der Partikeldurchmesser oder Korngrößen. Ein Partikeldurchmesser D50 im Bereich größer als 200 Mikrometer weist dabei den Vorteil auf, dass innerhalb jedes Partikels die Ausrichtung des Magnetfeldes besonders stabil und/oder homogen ist, da weniger Korngrenzen vorhanden sind, als ein Partikeldurchmesser D50 in einem Bereich kleiner als 200 Mikrometer. Dieser Bereich weist dagegen den Vorteil auf, dass die Partikel besonders dicht und/oder raumfüllend in den Flusssperren angeordnet sind.

Eine Weiterbildung sieht vor, dass in einer oder mehreren oder jeder der Flusssperren die Partikeldurchmesser der Partikel eine statistische Verteilung aufweist, die monomodal ist. Insbesondere stellt der Partikeldurchmesser D50 die einzige Maximalstelle einer statistischen Verteilung der Partikeldurchmesser dar. Um die beschriebenen Vorteile großer Partikel und kleiner Partikel zu kombinieren, sieht eine Weiterbildung vor, dass die statistische Verteilung bimodal oder mehrmodal ist. Bei bi- oder mehrmodalen Partikelgrößen erhält man den Effekt, dass der Füllgrad steigt und somit die magnetischen Eigenschaften im Vergleich zu einer monomodalen Verteilung größer sind. Die beschriebene statistische Verteilung wird auch als Partikelgrößenverteilung bezeichnet.

Eine Weiterbildung der Erfindung sieht vor, dass eine oder mehrere oder jede der Flusssperren in dem Querschnitt des Rotors als runder sich zwischen jeweils zwei benachbarten d-Achsen erstreckender Bogen ausgestaltet ist. Mit anderen Worten ist die bereits beschriebene Längsachse dieser Flusssperren als Bogen ausgestaltet, der zur Rotationsachse des Rotors hin gekrümmt ausgestaltet ist und eine d-Achse mit der in Umfangsrichtung benachbarten d-Achse zumindest in Verlängerung verbindet. Die Flusssperren weisen also eine bogenförmige Form auf. Bevorzugt weisen sie auch eine runde, das heißt eckenfreie Kontur auf. Hierdurch ergibt sich der Vorteil, dass die Flussführung für den magnetischen Fluss des Stators besonders effizient für einen Reluktanzantrieb ist. Hierdurch kann die Blechpaketform, die zum Herstellen des Rotors gemäß der Erfindung genutzt wird, auch zum Herstellen eines Reluktanzrotors ohne eigene Magnetisierung verwendet werden. Zum Herstellen der Rotorbleche für reine Reluktanzrotoren einerseits und den erfindungsgemäßen Rotor ist also kein gesonderter Blechschnitt nötig, das heißt es kann dasselbe Stanzwerkzeug zum Bereitstellen der Rotorbleche genutzt werden. Dies macht den erfindungsgemäßen Rotor besonders kostengünstig in der Herstellung, da er auf Blechpaketen eines herkömmlichen Reluktanzrotors aufbauen oder basieren kann.

Zu der Erfindung gehört auch eine elektrische Maschine, die als Reluktanz-Motor und/oder als Reluktanz-Generator betrieben werden kann. Die elektrische Maschine weist einen Stator und einen in dem Stator drehbar gelagerten Rotor auf, der eine Ausgestaltung des erfindungsgemäßen Rotors ist. Die elektrische Maschine kann somit sowohl nach dem Reluktanzprinzip als auch nach dem Prinzip der Synchronmaschine kombiniert oder gleichzeitig betrieben werden. Hierdurch ist eine Effizienz der elektrischen Maschine größer als bei einem reinen Reluktanzmaschine.

Der erfindungsgemäße Rotor ist insbesondere durch eine Ausführungsform des erfindungsgemäßen Verfahrens hergestellt.

Das erfindungsgemäße Verfahren sieht vor, zum Bilden jeder Schicht des Blechpakets jeweils eine magnetisch leitfähige Rotorblechschicht oder kurz ein Blech bereitzustellen, welches die Flussleitabschnitte der Schicht aufweist und bei welchem als die Flusssperren Aussparungen vorgesehen sind, die beispielsweise durch Ausstanzen erzeugt sein können. Die Bleche werden zu dem Blechpaket in axialer Richtung aufgestapelt oder aufgefädelt. Hierbei werden die Flusssperren insbesondere axial fluchtend angeordnet, so dass in dem Blechpaket die Flusssperren der einzelnen Schichten mit den jeweils korrespondierenden Flusssperren der anderen Schichten einen axial oder in einem spitzen Winkel axial geschrägt verlaufenden Tunnel, Durchgang oder Schacht bilden. Nach dem Auffädeln des Blechpakets wird die Vergussmasse in die Flusssperren als fließfähige oder flussfähige Suspension eingefüllt. Die Partikel der Vergussmasse werden mit einem Magnetfeld beaufschlagt, während die Vergussmasse weich ist. Hierdurch richten sich die Magnetfelder der Partikel entlang eines Feldverlaufs des Magnetfelds aus. Die Vergussmasse wird dann ausgehärtet. Die Vergussmasse kann beispielsweise durch Spritzgießen eingefüllt werden. Im Zusammenhang mit dem Einfüllen eines Schlammes als Vergussmasse kann dieser durch Spritzpressen eingefüllt werden. Anschließend kann der Schlamm getrocknet werden, indem die darin enthaltene Flüssigkeit, beispielsweise Wasser, ausgepresst wird und/oder durch Erhitzen der Schlamm getrocknet wird.

Der Verfahren sieht vor, dass die Vergussmasse Fasern aufweist und an gegenüberliegenden axialen Paketenden des Blechpakets jeweils eine aus der Vergussmasse gebildete Endscheibe an das Blechpaket angegossen wird, sodass die Vergussmasse in den Flusssperren und die Endscheiben einen einteiligen Körper bilden, durch welchen die Schichten des Blechpaktes mit einer axialen Kraft beaufschlagt werden.

Die Partikel werden gemäß der beschriebenen Ausführungsform des Verfahrens während des Einfüllens der Vergussmasse mit dem Magnetfeld beaufschlagt. Hierdurch ergibt sich der Vorteil, dass die Partikel in Bewegung sind. Hierdurch können auch große Partikel und/oder asymmetrisch und/oder länglich geformte Partikel mit einem solchen Magnetfeld ausgerichtet werden, das nicht derart stark sein muss, dass es diese Partikel auch im Stillstand drehen kann.

Gemäß einer Ausführungsform des Verfahrens werden die Partikel zusätzlich oder alternativ nach dem Einfüllen der Vergussmasse mit dem Magnetfeld beaufschlagt. Hierdurch ergibt sich der Vorteil, dass eine Klumpenbildung der Vergussmasse durch magnetisches Haften der Partikel während des Einfüllens verringert oder vermieden werden kann. Insbesondere wird ausschließlich nach dem Einfüllen das Magnetfeld auf die Partikel gerichtet. Es kann aber auch eine Kombination der beiden Verfahrensschritte sein, so dass während und nach dem Einfüllen die Partikel mit dem Magnetfeld beaufschlagt werden. Hierbei können unterschiedliche Magnetfeldstärken vorgesehen sein, um während des Einfüllens ein Verklumpen der Partikel zu verhindern und diese dennoch auszurichten. Hierbei ist das Magnetfeld während des Einfüllens bevorzugt schwächer als nach dem Einfüllen. Mittels des Magnetfelds, das nach dem Einfüllen angelegt wird, werden die Partikel gemäß einer Ausführungsform magnetisiert, d.h. die Partikel werden zunächst als unmagnetisierte Partikel in die Flusssperren gefüllt und der nach dem Einfüllen permanent magnetisiert.

Jedes Blech, das eine der Schichten bildet, kann die einzelnen Flussleitabschnitte als miteinander zusammenhängende Teilbereiche aufweisen. Eine Weiterbildung sieht das Trennen der Flussleitabschnitte nach dem Auffädeln der Bleche vor. Hierbei wird nach dem Auffädeln der Bleche ein Außenring jedes Blechs durch ein spanendes Verfahren entfernt und hierdurch jedes der Bleche in mehrere voneinander getrennte Flussleitabschnitte oder magnetisch leitfähige Rotorbleche aufgeteilt oder aufgetrennt.

Im Folgenden ist ein Ausführungsbeispiel der Erfindung beschrieben. Hierzu zeigt:
- FIG 1: eine schematische Darstellung einer Ausführungsform des erfindungsgemäßen elektrischen Maschine und
- FIG 2: eine schematische Darstellung einer perspektivischen Ansicht eines Rotors der elektrischen Maschine von FIG 1,
- FIG 3: eine schematische Darstellung einer perspektivischen Sicht auf einen Teilschnitt eines durch eine Vergussmasse gebildeten Körpers im Rotor von FIG 2,
- FIG 4: eine schematische Darstellung eines Querschnitts eines Rotor von FIG 2, wobei hier eine Darstellung des jeweiligen Magnetfelds der Partikel unter einem Winkel zur Längserstreckungsrichtung der Flusssperren angegeben ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

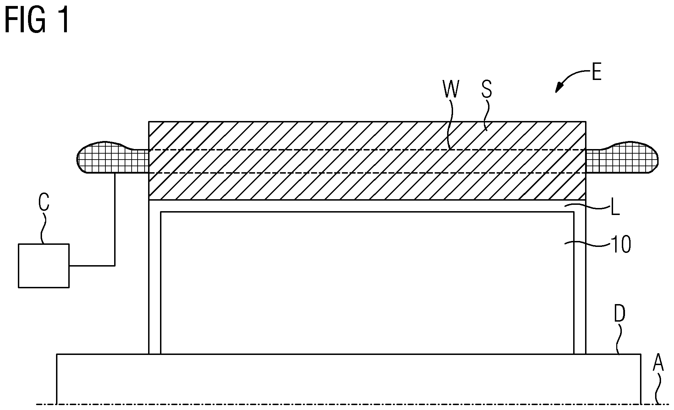

In FIG 1 ist ein Längsschnitt einer elektrischen Maschine E gezeigt, bei der es sich z.B. um einen Reluktanz-Motor handelt. In FIG 1 stellt eine Rotationsachse A auch eine Symmetrieachse der Darstellung dar. Die elektrische Maschine E umfasst einen Stator S, in welchem Wicklungen W elektrischer Spulen angeordnet sind, wobei in FIG 1 nur eine der Wicklungen W dargestellt ist. Die Wicklungen W können aus elektrischen Leitelementen, z.B. Drähten oder Stäben, gebildet sein. Die Wicklungen W werden durch ein Drehstromquelle C abwechselnd bestromt, wodurch im Inneren des Stators S ein magnetisches Drehfeld in einem Luftspalt L der elektrischen Maschine E entsteht. Die Drehstromquelle C kann beispielsweise ein Wechselrichter oder ein festfrequentes elektrisches Versorgungsnetz sein.

Im Inneren des Stators S befindet sich ein Rotor 10, der drehfest mit einer Welle D verbunden ist. Die Welle D ist um die Rotationsachse A drehbar in dem Stator S gelagert.

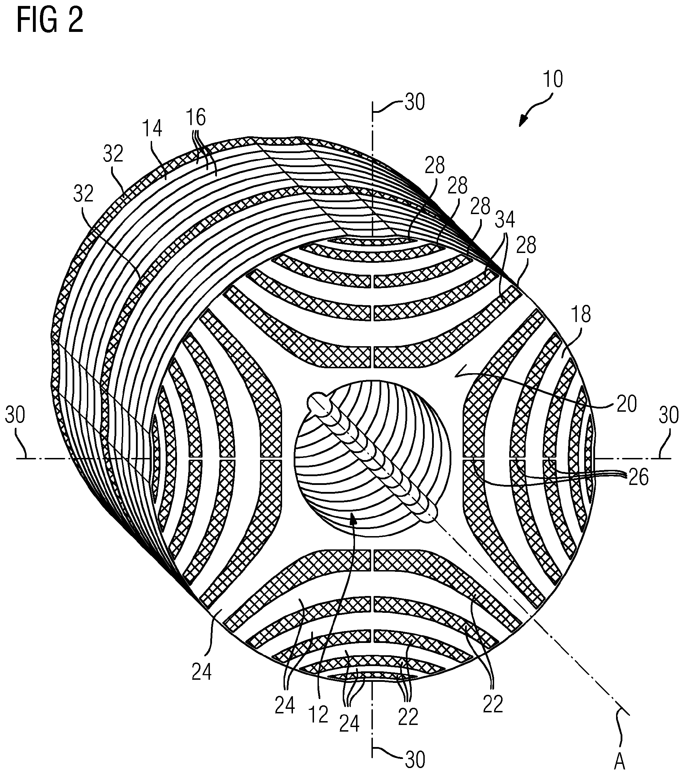

Der Rotor 10 ist eine Ausführungsform des erfindungsgemäßen Rotors. In FIG 2 ist der Rotor 10 allein dargestellt.

Durch eine Durchgangsöffnung 12 des Rotors 10 ist die (in FIG 2 nicht mehr dargestellte) Welle D gesteckt. Ein Durchmesser des Rotors 10 in bezüglich der Rotationsachse A radialer Richtung kann mehr als 20 cm betragen. Eine Länge des Rotors 10 in axialer Richtung kann mehr als 30 cm betragen.

Der Rotor 10 weist als magnetisch aktiven Teil ein Blechpaket 14 auf, das aus mehreren Schichten 16 gebildet ist. Von den magnetischen Schichten 16 sind in der FIG 2 der Übersichtlichkeit halber nur einige mit einem Bezugszeichen versehen. Zwischen den Schichten befindet sich jeweils in an sich bekannter Weise eine elektrisch isolierende Schicht, um Wirbelströme in dem Blechpaket 14 zu blockieren. Jede Schicht 16 ist in dem in FIG 2 gezeigten Beispiel jeweils durch ein weichmagnetisches Rotorblech 18 gebildet. Eine andere Bezeichnung für Rotorblech ist auch Elektroblech oder Transformatorblech.

In der FIG 2 ist nur das Rotorblech 18, welches sich an einer Stirnseite 20 in axialer Richtung entlang der Achse A an einem vorderen Ende des Blechpakets 14 befindet, mit einem Bezugszeichen versehen. Das Rotorblech 18 (und entsprechend auch die übrigen Rotorbleche der übrigen Schichten 16) weist Aussparungen 22 auf, die Sperren für einen magnetischen Fluss bilden, also Flusssperren. Die Aussparungen 22 können beispielsweise durch Ausstanzen der entsprechenden Formen aus dem Rotorblech 18 gebildet sein.

Von dem Rotorblech 18 sind somit nur Flussleitabschnitte 24 und optional Stege 26 zum mechanischen Verbinden der Flussleitabschnitte 24 sowie optional ein Außenring 28 zum mechanischen Verbinden der Flussleitabschnitte 24 vorhanden. Die Rotorbleche der Schichten 16 können alle die gleiche Form aufweisen. Mittels der Flussleitabschnitte 24 wird in dem Rotor ein magnetischer Fluss, der durch die elektrische Spulen W des Stators S erzeugt wird, schräg oder quer zu q-Achsen 30 des Rotors 10 entlang einer magnetischen Vorzugsrichtung zwischen jeweils zwei d-Achsen geleitet oder geführt.

Die Rotorbleche 18 können in der Weise fluchtend in dem Blechpaket 14 axial hintereinander angeordnet sein, dass die Aussparungen 22 und entsprechend auch die Flussleitabschnitte 24 axial fluchten. Die Aussparungen 22 aller hintereinander angeordneten Rotorbleche 18 bilden insgesamt Schächte oder Räume in dem Blechpaket 14. Die den Schächten befindet sich eine Vergussmasse. Die Vergussmasse weist insbesondere eine geringere magnetische Leitfähigkeit als das Material der Flussleitabschnitte auf.

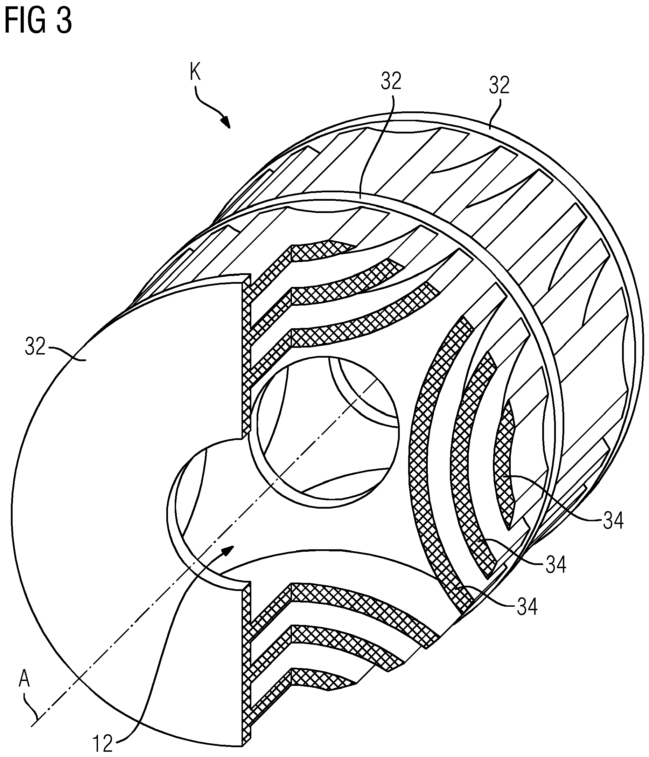

In FIG 3 ist dargestellt, dass die Vergussmasse in den Flusssperren zusammen mit Scheiben 32 aus der Vergussmasse einen Körper K bildet, in welchem die Flussleitabschnitte 24 (in FIG 3 nicht dargestellt) eingebettet oder integriert oder angeordnet sind. Der Körper K kann durch Ausfüllen der Flusssperren, d.h. der durch die Aussparungen 22 gebildeten Schächte in dem Blechpaket 14, mit der Vergussmasse hergestellt worden sein. Hierdurch sind in den Aussparungen 22 Stäbe 34 aus dem Material der Vergussmasse ausgebildet. Um die Stäbe 34 mechanisch zu verbinden, sind die Stäbe 34 durch radial vollständig ausgegossene Teilbereiche in Form der Scheiben 32 verbunden. Mit "voll ausgegossen" ist hierbei gemeint, dass natürlich auch in den Scheiben 32 die Durchgangsöffnung 12 für die Welle vorgesehen ist.

Zwei der Scheiben 32 sind an den beiden Stirnseiten, d.h. der Stirnseite 20 und der axial gegenüberliegenden Seite des Blechpakets 14, als Endscheiben vorgesehen. In FIG 2 ist dabei die vordere Scheibe 32, die sich an der Stirnseite 20 befindet, nicht dargestellt, um die Struktur des Rotorblechs 18 darstellen zu können. Es kann auch vorgesehen sein, dass zur weiteren mechanischen Stabilisierung zusätzlich zu den axial außen an den Blechpaketenden liegenden Scheiben 32 eine oder mehrere Zwischenscheiben im Blechpaket 14 aus der Vergussmasse bereitzustellen.

Die Vergussmasse kann beispielsweise mittels eines Spritzguss- oder Druckgussverfahrens oder durch Spritzpressen nach dem Auffädeln, d.h. den Aneinanderreihen der Rotorbleche 18, in die Aussparungen 22 und in den Bereich der Scheiben 32 eingebracht worden sein. Um die Dicke der Scheiben 32 und deren Position festzulegen, können benachbarte Rotorbleche 18 beim Auffädeln durch Distanzstücke, beispielsweise Ringe oder Klötze, auf Abstand gehalten werden, so dass sich beim Vergießen die zylindrischen Zwischenscheiben aus Vergussmasse ergeben.

Beim Vergießen können auch die beiden Scheiben 32 an den Blechpaketenden geformt werden, womit sich ein mechanisch fester Verbund des Blechpakets 14 ergibt. Das Blechpaket 14 kann somit als einzelnes Bauteil verwendet werden. Ein aufwendiger Fügeprozess der einzelnen Bleche auf die Welle D, zusammen mit den Endscheiben 32 zum Verspannen, kann vermieden werden, womit Herstellungskosten eingespart werden. Der Verguss verhindert zudem radiale und axiale Schwingungen der einzelnen Rotorbleche 14, da es sich um ein festes Gebilde handelt.

Die Drehzahleignung kann durch Material mit hoher Zugfestigkeit und Materialien mit geeigneten Füllstoffen erhöht werden, indem ein Füllstoff, beispielsweise Fasern, insbesondere Glasfasern, in der Vergussmasse bereitgestellt ist.

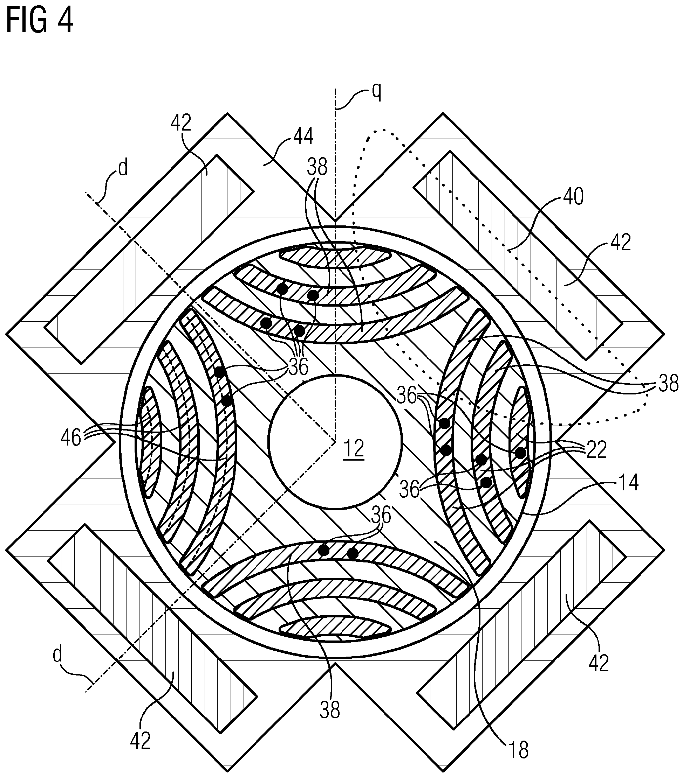

Wie in FIG 4 veranschaulicht ist, weist die Vergussmasse Körner oder Partikel 36 auf, von denen jeder einen Permanentmagneten darstellt. Mit anderen Worten sind die Partikel dauermagnetisch. In FIG 4 sind exemplarisch nur einige Partikel 36 dargestellt, die zudem stark vergrößert gezeigt sind. Jeder Partikel 36 kann kleiner als ein jeweiliger Durchmesser jedes Partikels 36 kann kleiner als 5 Zentimeter, insbesondere 1, bevorzugt kleiner als 1 Millimeter, sein. Eine Anzahl der Partikel ist insbesondere größer als 1000, insbesondere größer als 5000.

Durch den mittels Verguss der Aussparungen 22 gebildeten und aufgrund der Partikel 36 magnetischen Körper K ergibt sich eine Verknüpfung des durch die Flussleitabschnitte 24 gebildeten Reluktanzeffekts mit einer permanenten magnetischen Erregung entsprechend einem Synchronmotor.

Die Partikel 36 können kunststoffgebunden sein, das heißt in einen Kunststoff 38 eingebettet oder integriert sein. Mindestens eine Flusssperre oder Aussparung 22 zwischen jeweils zwei benachbarten d-Achsen weist hierbei die dauermagnetischen Partikel 36 auf. Die Partikel 36 können hierzu beispielsweise in die Vergussmasse als Dauermagnetpulver bereitgestellt sein. Dann lässt sich die Vergussmasse im fließfähigen Zustand zum Ausgießen oder Spritzgießen oder Spritzpressen der Aussparungen 22 verwenden. Das Pulver kann eine mono-, bi- oder mehrmodale Partikelgröße und Partikelverteilung aufweisen. Durch den Kunststoff 38 ist eine Kunststoffmatrix gebildet, in welcher die Magnetpulveranteile in beliebig geformten Volumina möglich sind. Es kann ein Volumenverhältnis von 20 Prozent bis 80 Prozent vorgesehen sein, um hierdurch einen Abgleich zwischen magnetischer Erregung durch die Partikel 36 einerseits und mechanischer Stabilisierung durch den Kunststoff 38 andererseits zu erhalten. Mit diesem Kunststoffverbund werden gleichzeitig auch die Endscheiben 32 des Rotors angegossen, die ein axiales Verspannen des Rotorpakets gewährleisten sowie insgesamt den Rotor stabilisieren. Um bei Bedarf die Zugfestigkeit des Körpers K zu erhöhen, kann zusätzlich ein weiterer Füllstoff vorgesehen sein, insbesondere Fasern. Der Kunststoff 38 kann aus einem Duro- und/oder Thermoplast gebildet sein und hierdurch flexibel an das Anforderungsprofil der elektrischen Maschine E angepasst sein.

In FIG 4 ist des Weiteren veranschaulicht, wie die Partikel 36 in Bezug auf ihr Magnetfeld ausgerichtet werden können. Zur Ausrichtung des Magnetmaterials besteht die Möglichkeit, während des Spritzgießens ein Magnetfeld 40 in das Blechpaket 14 einzuprägen. Hierzu kann das Blechpaket 14 in eine Anordnung aus elektrischen Spulen 42 und einer weichmagnetischen Flussführung 44 angeordnet sein. Somit besteht die Möglichkeit, während des Spritzgießens das Magnetfeld 40 anzulegen, so dass die Magnetteilchen oder Partikel 36 in einer Kunststoffschmelze des Kunststoffs 38 anisotrop entsprechend einem Verlauf der Aussparungen 22 oder Flusssperren beziehungsweise einem Verlauf der Flussleitabschnitte 24 ausgerichtet werden. Es ist auch möglich, das Magnetmaterial, das heißt die Partikel 36, nach dem Vergießen durch das angelegte Magnetfeld 40 aufzumagnetisieren. Mit anderen Worten werden die Partikel in unmagnetisierter Form in den Aussparungen 22 angeordnet und anschließend nach dem Einfüllen der Vergussmasse magnetisiert oder in Dauermagneten umgewandelt. Es geht auch eine Kombination der beiden beschriebenen Verfahren zum Magnetisieren, falls die Partikel 36 schon vor dem Einfüllen dauermagnetisch sind.

Indem die Partikel 36 als Vergussmasse eingebracht oder in das Blechpaket 14 eingegossen werden, kann eine Längserstreckungsrichtung 46 der Aussparungen 22 in dem in FIG 4 gezeigten Querschnitt des Blechpakets 14, das heißt des Rotors 10, einen bogenförmigen und insbesondere eckenfreien Verlauf zwischen den d-Achsen aufweisen und hierdurch optimiert für den Reluktanzeffekt ausgestaltet sein. Die Vergussmasse passt sich beim Einfüllen in die Flusssperren an die Form der Flusssperren an.

Insgesamt ergibt sich somit ein einfaches und vollständiges Befüllen der Flusssperren mit einem magnetischen Material in Form der Partikel 36. Die Partikel 36 oder Magnetteilchen sind entlang dem erforderlichen magnetischen Fluss ausgerichtet. Technische Eigenschaften des Körpers K sind durch anteilige Verwendung der Materialkomponenten Kunststoff, magnetische Teilchen und Füllstoff oder Fasern einstellbar. Das Befestigen und axiale Verspannen der Rotorbleche kann durch Anbringen von Endscheiben aus derselben Vergussmasse vorgesehen werden. Bei der Herstellung des beschriebenen Rotors und solchen Rotoren, die keine permanentmagnetische Erregung aufweisen sollen, sondern reine Vagati-Rotoren bilden sollen, ist in vorteilhafter Weise nur ein Rotorblechschnitt erforderlich für die reine Reluktanztechnik mit Flusssperren sowie für die beschriebene magnetunterstützte Reluktanztechnik. Hierdurch ergeben sich eine Reduzierung von Fertigungsschritten und eine Kosteneinsparung.

Insgesamt zeigt das Beispiel, wie durch die Erfindung ein Reluktanzrotor mit kunststoffgebundenem Magnetmaterial bereitgestellt werden kann.

## Patentansprüche

1. Rotor (10) für eine Reluktanzmaschine (E), wobei der Rotor (10) ein Blechpaket (14) mit Schichten (16) aufweist, von denen jede mehrere jeweils durch ein magnetisch leitfähiges Rotorblech (18) gebildete, sich zwischen jeweils zwei benachbarten d-Achsen und schräg zu einer jeweiligen q-Achse (30) erstreckende Flussleitabschnitte (24) aufweist, wobei die Flussleitabschnitte (24) voneinander jeweils durch eine mit einer Vergussmasse ausgegossene Flusssperre (22) getrennt sind, wobei in einer oder mehreren oder jeder der Flusssperren (22) die Vergussmasse Partikel (36) aufweist, die dauermagnetisch sind, **dadurch gekennzeichnet, dass** die Vergussmasse Fasern aufweist und an gegenüberliegenden axialen Paketenden (20) des Blechpakets (14) jeweils eine aus der Vergussmasse gebildete Endscheibe (32) an das Blechpaket (14) angegossen ist, sodass die Vergussmasse in den Flusssperren (22) und die Endscheiben (32) einen einteiligen Körper (K) bilden, durch welchen die Schichten (16) des Blechpaktes (14) mit einer axialen Kraft beaufschlagt sind.

2. Rotor (10) nach Anspruch 1, wobei in einer oder mehreren oder jeder der Flusssperren (22) ein jeweiliges Magnetfeld der Partikel (36) entlang einer Längserstreckungsrichtung (46) der Flusssperre (22) oder unter einem Winkel zur Längserstreckungsrichtung (46) der Flusssperre (22) ausgerichtet ist.

3. Rotor (10) nach einem der vorhergehenden Ansprüche, wobei in einer oder mehreren oder jeder der Flusssperren (22) die Partikel (36) als getrocknetes Sediment in der Flusssperre (22) abgelagert sind.

4. Rotor (10) nach einem der vorhergehenden Ansprüche, wobei in einer oder mehreren oder jeder der Flusssperren (22) die Partikel (36) in einem festen Kunststoff (38) angeordnet sind.

5. Rotor (10) nach einem der vorhergehenden Ansprüche, wobei zumindest eine der Endscheiben (32) rotatorisch asymmetrisch ausgestaltet ist und die jeweilige rotatorische Asymmetrie eine bezüglich einer Rotationsachse (A) vorhandene Unwucht des Bleckpakets (14) zumindest teilweise kompensiert.

6. Rotor (10) nach einem der vorhergehenden Ansprüche, wobei in einer oder mehreren oder jeder der Flusssperren (22) die Partikel (36) als ein Dauermagnetpulver, insbesondere Hartferritpulver und/oder ein Seltenerdmagnetpulver, bereitgestellt sind.

7. Rotor (10) nach einem der vorhergehenden Ansprüche, wobei ein mittlerer Partikeldurchmesser D50 in einem Bereich von 10 Mikrometer bis 1 Millimeter liegt.

8. Rotor (10) nach einem der vorhergehenden Ansprüche, wobei in einer oder mehreren oder jeder der Flusssperren (22) Partikeldurchmesser der Partikel eine statistische Verteilung aufweist, die monomodal oder bimodal oder mehrmodal ist.

9. Rotor (10) nach einem der vorhergehenden Ansprüche, wobei eine oder mehrere oder jede der Flusssperren (22) in einem Querschnitt des Rotors (10) jeweils als runder, sich zwischen jeweils zwei benachbarten d-Achsen erstreckender Bogen ausgestaltet ist.

10. Elektrische Maschine (E), die einen Stator und einen in dem Stator (S) drehbar gelagerten Rotor (10) gemäß einem der vorhergehenden Ansprüche aufweist.

11. Verfahren zum Herstellen eines Rotors (10) gemäß einem der Ansprüche 1 bis 9, wobei zum Bilden jeder Schicht (16) des Blechpakets (14) jeweils ein magnetisch leitfähiges Blech (18) bereitgestellt wird, welches die Flussleitabschnitte (24) der Schicht (16) aufweist und bei welchem als die Flusssperren (22) Aussparungen (22) vorgesehen sind, und die Bleche (18) zu dem Blechpaket (18) aufgefädelt werden und nach dem Auffädeln des Blechpakets (14) die Vergussmasse in die Flusssperren (22) als fließfähige Suspension eingefüllt wird und die Partikel (36) der Vergussmasse mit einem Magnetfeld (40) beaufschlagt werden und die Vergussmasse ausgehärtet wird, **dadurch gekennzeichnet, dass** die Vergussmasse Fasern aufweist und an gegenüberliegenden axialen Paketenden (20) des Blechpakets (14) jeweils eine aus der Vergussmasse gebildete Endscheibe (32) an das Blechpaket (14) angegossen wird, sodass die Vergussmasse in den Flusssperren (22) und die Endscheiben (32) einen einteiligen Körper (K) bilden, durch welchen die Schichten (16) des Blechpaktes (14) mit einer axialen Kraft beaufschlagt werden.

12. Verfahren nach Anspruch 11, wobei die Partikel (36) während des Einfüllens der Vergussmasse mit dem Magnetfeld (40) beaufschlagt werden, während die Vergussmasse weich ist.

13. Verfahren nach Anspruch 11 oder 12, wobei die Partikel (36) nach dem Einfüllen der Vergussmasse mit dem Magnetfeld (40) beaufschlagt werden und hierdurch nachträglich aufmagnetisiert werden.

## Claims

1. Rotor (10) for a reluctance machine (E), wherein the rotor (10) has a laminated core (14) with layers (16), of which each has a number of flux-conducting portions (24) formed in each case by a magnetically conducting rotor plate (18) extending in each case between two adjacent d-axes and at an angle to a respective q-axis (30) wherein the flux-conducting portions (24) are separated from one another in each case by a flux barrier (22) cast with a casting compound, wherein in one or more or in each of the flux barriers (22), the casting compound has particles (36) that are permanently magnetic, **characterised in that** the casting compound has fibres and at the opposite axial core ends (20) of the laminated core (14) an end disk (32), formed from the casting compound in each case, is cast onto the laminated core (14), so that the casting compound in the flux barriers (22) and the end disks (32) form a one-piece body (K), through which the layers (16) of the laminated core (14) have an axial force applied to them.

2. Rotor (10) according to claim 1, wherein, in one or more or in each of the flux barriers (22) a respective magnetic field of the particles (36) is aligned in a longitudinal extent direction (46) of the flux barrier (22) or at an angle to the longitudinal extent direction (46) of the flux barrier (22).

3. Rotor (10) according to one of the preceding claims, wherein, in one or more or in each of the flux barriers (22), the particles (36) are deposited in the flux barrier (22) as a dried sediment.

4. Rotor (10) according to one of the preceding claims, wherein, in one or more or in each of the flux barriers (22), the particles (36) are arranged in a solid plastic (38).

5. Rotor (10) according to one of the preceding claims, wherein at least one of the end disks (32) is arranged rotationally asymmetrically and the respective rotational asymmetry compensates, at least in part, for an imbalance of the laminated core (14) present in relation to an axis of rotation (A).

6. Rotor (10) according to one of the preceding claims, wherein, in one or more or in each of the flux barriers (22), the particles (36) are provided as a permanent magnetic powder, in particular a hard ferrite powder and/or a rare earth magnetic powder.

7. Rotor (10) according to one of the preceding claims, wherein an average particle diameter D50 lies in a range of 10 micrometres to 1 millimetre.

8. Rotor (10) according to one of the preceding claims, wherein, in one or more or in each of the flux barriers (22), particle diameters of the particle have a statistical distribution that is monomodal or bimodal or multimodal.

9. Rotor (10) according to one of the preceding claims, wherein, one or more or in each of the flux barriers (22), in a cross section of the rotor (10), is embodied in each case as a round arc extending in each case between two adjacent d-axes.

10. Electrical machine (E) having a stator and a rotor (10) supported rotatably in the stator (S) according to one of the preceding claims.

11. Method for manufacturing a rotor (10) according to one of claims 1 to 9, wherein to form each layer (16) of the laminated core (14), a magnetically conductive plate (18) is provided in each case, which has the flux-conducting portions (24) of the layer (16) and in which cutouts (22) are provided as the flux barriers (22), and the plates (18) are threaded-on to form the laminated core (18) and after the threading-on of the laminated core (14), the flux barriers (22) are filled with the casting compound as a flowable suspension and the particles (36) of the casting compound have a magnetic field (40) applied to them and the casting compound is hardened, **characterised in that** the casting compound has fibres and at opposite axial core ends (20) of the laminated core (14), an end disk (32) formed from the casting compound in each case, is cast onto the laminated core (14), so that the casting compound in the flux barriers (22) and the end disks (32) form a one-piece body (K), through which an axial force is applied to the layers (16) of the laminated core (14).

12. Method according to claim 11, wherein the particles (36) have the magnetic field (40) applied to them during the filling process of the casting compound, while the casting compound is soft.

13. Method according to claim 11 or 12, wherein the particles (36) have the magnetic field (40) applied to them after the filling process of the casting compound and are magnetised afterwards by this method.

## Revendications

1. Rotor (10) pour une machine (E) à réluctance, le rotor (10), ayant un paquet (14) de tôles ayant des feuillets (16), dont chacun a plusieurs parties (24) conductrices de flux, formées chacune d'une tôle (18) rotorique conductrice magnétiquement et s'étendant entre, respectivement, deux axes d voisins et en oblique par rapport à un axe (30q) respectif, les parties (24) conductrices de flux étant séparées les unes des autres, respectivement, par une barrière (22) au flux, coulée avec une masse de scellement, dans lequel, dans une ou dans plusieurs ou dans chaque barrière (22) au flux, la masse de scellement a des particules (36) à magnétisme permanent, **caractérisé en ce que** la masse de scellement a des fibres et, sur des extrémités (20) axiales opposées du paquet (14) de tôles, est coulée, sur le paquet (14) de tôles, respectivement, un flasque (32) en masse de scellement, de manière à ce que la masse de scellement forme, dans les barrières (22) au flux et les flasques (32), un corps (K) d'une seule pièce, par lequel les feuillets (16) du paquet (14) de tôles sont soumis à une force axiale.

2. Rotor (10) suivant la revendication 1, dans lequel, dans l'une ou plusieurs ou dans chaque barrière (22) au flux, un champ magnétique des particules (36) et dirigé suivant une direction (46) d'étendue en longueur de la barrière (22) au flux ou en faisant un angle avec la direction (46) d'étendue en longueur de la barrière (22) au flux.

3. Rotor (10) suivant l'une des revendications précédentes, dans lequel, dans une ou plusieurs ou chaque barrière (22) au flux, les particules (36) sont déposées sous forme d'un sédiment séché dans la barrière (22) au flux.

4. Rotor (10) suivant l'une des revendications précédentes, dans lequel, dans une ou plusieurs ou chaque barrière (22) au flux, les particules (36) sont mises dans une matière (38) plastique solide.

5. Rotor (10) suivant l'une des revendications précédentes, dans lequel au moins l'un des flasques (32) est dissymétrique en rotation et la dissymétrie en rotation compense, au moins en partie, un balourd, présent par rapport à un axe (A) de révolution, du paquet (14) de tôles.

6. Rotor (10) suivant l'une des revendications précédentes, dans lequel, dans une ou plusieurs ou chaque barrière (22) au flux, les particules (36) sont sous la forme d'une poudre d'aimant permanent, notamment d'une poudre de ferrite dure et/ou d'une poudre d'aimant de terre rare.

7. Rotor (10) suivant l'une des revendications précédentes, dans lequel un diamètre D50 moyen des particules est dans une plage allant de 10 microns à 1 millimètre.

8. Rotor (10) suivant l'une des revendications précédentes, dans lequel, dans l'une ou plusieurs ou chaque barrière (22) au flux, le diamètre des particules a une distribution statistique, qui est monomodale ou bimodale ou plurimodale.

9. Rotor (10) suivant l'une des revendications précédentes, dans lequel une ou plusieurs ou chaque barrière (22) au flux est conformée dans une section transversale du rotor (10), respectivement, suivant un arceau circulaire, s'étendant, respectivement, entre deux axes d voisins.

10. Machine (E) électrique, qui a un stator et un rotor (10) suivant l'une des revendications précédentes, monté tournant dans le stator (S).

11. Procédé de fabrication d'un rotor (10) suivant l'une des revendications 1 à 9, dans lequel, pour former chaque feuillet (16) du paquet (14) de tôles, on se procure respectivement une tôle (18) conductrice magnétiquement, qui a les parties (24) conductrices de flux du feuillet (16) et dans laquelle il est prévu des évidements (22), comme barrières (22) au flux et on enfile les tôles (18) en le paquet (18) de tôles, et après avoir enfilé le paquet (14) de tôles, on remplit les barrières (22) au flux de la masse de scellement sous la forme d'une suspension apte à s'écouler et on soumet les particules (36) de la masse de scellement à un champ magnétique et on durcit la masse de scellement, **caractérisé en ce que** la masse de scellement a des fibres et, sur des extrémités (20) axiales opposées du paquet (14) de tôles, est coulée, sur le paquet (14) de tôles, respectivement, un flasque (32) en masse de scellement, de manière à ce que la masse de scellement forme, dans les barrières (22) au flux et les flasques (32), un corps (K) d'une seule pièce, par lequel on soumet les feuillets (16) du paquet (14) de tôles à une force axiale.

12. Procédé suivant la revendication 11, dans lequel on soumet, pendant que l'on remplit de la masse de scellement, les particules (36) au champ (40) magnétique, alors que la masse de scellement est molle.

13. Procédé suivant la revendication 11 ou 12, dans lequel on soumet les particules (36), après l'avoir rempli de la masse de scellement, au champ (40) magnétique et, ainsi, on les réaimante après coup.
